# EUROPEAN PATENT SPECIFICATION

(11) **EP 1 125 503 B1**
(45) Date of publication and mention of the grant of the patent: **01.02.2006**
(21) Application number: 99941666.2
(22) Date of filing: 03.09.1999
(51) Int. Cl.: A22C 7/00

(54) **METHOD AND DEVICE FOR STUFFING MEAT MATERIALS INTO SAUSAGES CLOSED BY STAPLING**
VERFAHREN UND VORRICHTUNG ZUM BEFÜLLEN VON MIT KLAMMERN VERSCHLOSSENER DÄRME MIT FLEISCHTEILE
PROCEDE ET DISPOSITIF DE CONDITIONNEMENT DE MATIERES CARNEES SOUS FORME DE SAUCISSES FERMEES PAR AGRAFAGE

(30) Priority: 04.09.1998 ES 9801878
(43) Date of publication of application: 22.08.2001
(73) Proprietor: METALQUIMIA, S.A., 17007 Girona (ES)
(72) Inventor: LAGARES COROMINAS, Narciso, E-17007 Girona (ES)
(74) Representative: Gislon, Gabriele
(86) International application number: PCT/ES1999/000284
(87) International publication number: WO 2000/013514

(56) References cited:
- EP-A- 0 507 374
- EP-A- 0 847 695
- EP-A- 0 904 697
- US-A- 3 462 793
- US-A- 3 975 795
- US-A- 4 417 434
- US-A- 4 419 790

## Description

This invention relates to a method for stuffing meat product sealed by stapling and a related device to carry it out.

### Background of the invention

The process followed up to now for stuffing meat product consisted, first, in conditioning the meat product to provide it with wished physical, organoleptic and sanitary characteristics. This conditioning generally includes chopping it or breaking it to pieces until reducing it to lumps having a variable size according to the product it is wished to obtain. Thereafter, by means of a suitable apparatus, a continuous flow of broken to pieces meat product occurs which is introduced in an endless sleeve which has a first end previously sealed by means of a staple, so that a continuous section of stuffed meat product is produced. Then, it is proceeded to choke said continuous section of stuffed meat product at regular intervals by means of a first and a second slightly spaced staples. With said stapling a continuous strip of stuffed meat product elements is obtained in a sleeve, sealed by stapling, linked to each other by a portion of sleeve existing between said first and said second staples close to each other. Last, the sleeve is cut by the portion thereof located between said first and second staples, obtaining that way individual, separate elements of meat product stuffed within a portion of sleeve sealed at both ends with staples.

In the state of the art, equipments and devices to carry out stuffing of meat product according to above disclosed method are known, and we can mention the application for a Spanish Patent nº 9702538 of same applicant, in which a machine for stuffing meat product is disclosed which comprises a hopper for receiving already conditioned meat product, within which two pistons are acting to remove and push said meat product to let it passes through a rotating valve, synchronized with the pistons motion so that a continuous flow of meat product is produced through a stuffing duct open at one end, in order the meat product is being stuffed at same time as it is going out in an endless sleeve which has been previously arranged, corrugated, on said stuffing duct with a first end sealed by means of a staple.

Also machines are known for choking at regular intervals a continuous sleeve stuffed with meat product by means of a double staple , i.e., a first and a second staples close to each other, and cutting the portion of the sleeve which remains located between two adjacent staples to produce individual portions of stuffed meat product sealed with staples, and as examples of this type of machine, we can mention the documents EP-0247546 and EP-0399195.

Usually, a stuffing facility comprises a stapling machine installed close to the outlet of a stuffing machine.

The problem the method and the devices of the state of the art show is that choking the continuous section of stuffed meat product by means of two adjacent staples has no sufficient strength to cut the fibres of the meat product, namely in the event that this later has a particular hardness or is broken to pieces with a relatively large size of lump, so that the individual pieces of sausages which result after cutting the portion of sleeve between two adjacent staples show portions or lumps of meat not fully cut which are seen at the eyes of the staples, which could not be fully sealed because of those portions being present. This causes that the pieces obtained are unacceptable for obvious sanitary reasons and cannot be presented to the public, because the portions of meat in contact with the external environment can be rotten and contaminate the meat within the sausage. Also event when the meat product is finely chopped a problem arises, because rests thereof can be left in the portion of the sleeve between two adjacent staples which will remain exposed to the external environment after cutting said portion of sleeve, which can produce bad smell.

EP-A-847695 discloses a method (basically also revealed in US-A-4.417.434) and a corresponding device for stuffing a meat product sealed by stapling having all the features of the preamble of claim 1.

However the device disclosed in EP-A-847695 is provided of a knife blade 17 driven in rotation, which implies the use of hydromotor or a pneumaticaly driven motor leading to a cumblesome assembly, which is avoided in the device of the present invention.

### Description of the invention

This invention provides for a device to stuff meat product sealed by staples which brings a solution to these problems.

The device enables to implement a method essentially consisting in introducing a new step in the conventional stuffing process which consists in cutting at regular intervals said continuous flow of meat product before introducing it in said endless sleeve, having said intervals of cutting coincident with the further choking intervals by means of a double staple.

The cut carried out in the meat continuous flow produces adjacent portions of meat product flow which move jointly within the stuffing duct pushing each other. The existence of said cut makes that there is a lack of cohesion between a portion of meat product flow and its preceding one which causes at the moment of chocking that both portions are taken apart from each other, sliding within the sleeve, leaving the portion of sleeve between two adjacent staples clean and clear.

Cutting is carried out by a trimming device comprising an enclosure intercalated in the meat continuous flow and providing a passage for the meat product and a guide for a cross driven cutting blade coming into the enclosure through a passageway. Said enclosure comprises two halves, coupled to each other leaving a cavity between them for housing and guiding said cutting blade. The device is characterized in that the coupling of said halves closes one of the ends of said flat cavity close to openings for meat product passage incorporated in each of the two halves while it leaves the other end open for the cutting blade free passage, said end remaining in operation, closed by the cutting blade by virtue of the small clearances.

This is achieved, according to this invention, by means of a new trimming device which may be installed interposed between a conventional stuffing machine and a conventional stapling machine.

The new trimming device comprises an enclosure intercalated in the duct of the meat product continuous flow, which provides a passageway for it and a guide for a cross cutting blade which has access to the enclosure through a passageway which remains closed by the cutting blade itself. Said enclosure has available means which comprise it allowing the eventual opening thereof. Also driving means for said cutting blade and suitable supporting means are provided.

Thereafter it is proceeded to disclose in details the invention which has to be read with reference to the drawing attached, being it understood that they are only an example of a possible embodiment of the invention therefore they must not be purported as restrictive but only illustrative.

### Short description of the invention

In the drawings:
Fig. 1 is a side elevation view of a stuffing device to carry out the method of this invention which includes a trimming device according to this invention;
Fig. 2 is a sketch which illustrates the steps of the new method of this invention;
Fig. 3 is an exploded view in perspective which shows an enclosure and a cutting blade of the trimming device of the invention;
Fig. 4 is a front view of the trimming device of the invention; and
Fig. 5 and 6 are cross section views taken respectively along the lines V-V and VI-VI of Fig. 4.

### Detailed explanation of some examples of embodiment of the invention

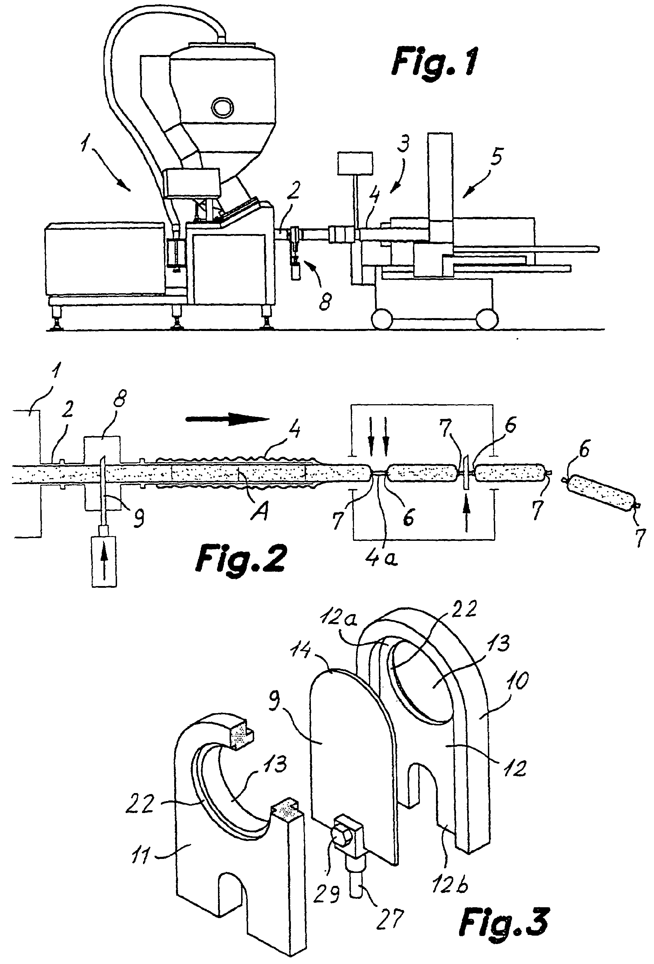

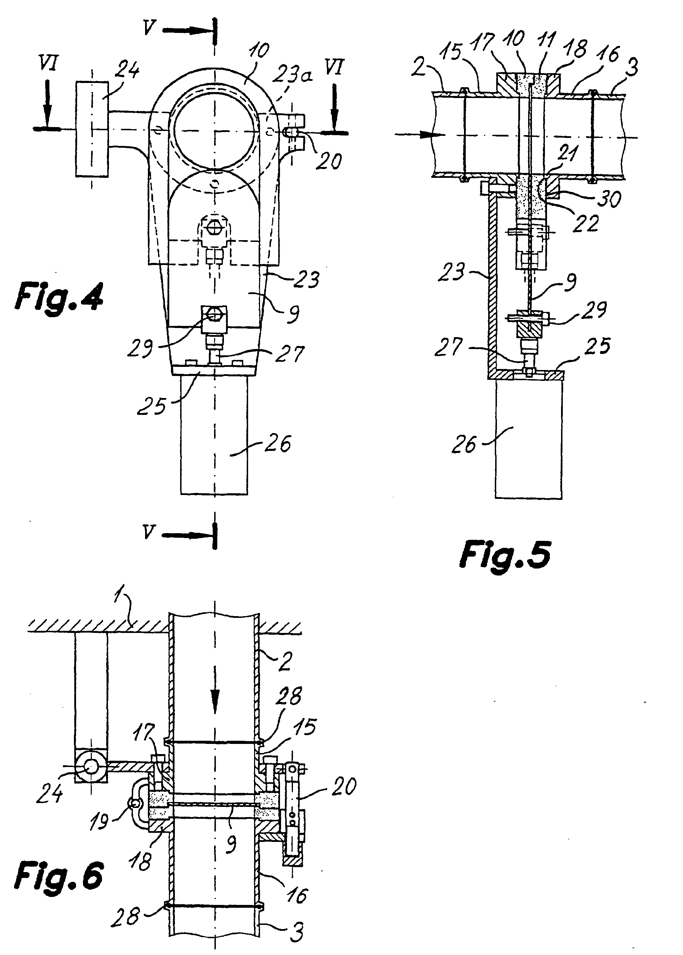

It is first referred to Fig. 1 and 2, in which is shown a device according to this invention for stuffing meat product sealed by stapling which comprises a stuffing area 3 where a continuous flow of previously conditioned meat product, supplied by a stuffing machine 1 through an outlet 2 is introduced in an endless sleeve 4. Said sleeve 4 has been previously arranged, corrugated on a duct in the stuffing area 3 and has a first end previously sealed by means of a staple. The meat product, when going out through the open end of the duct at the stuffing area 3, is filling the continuous sleeve 4 providing a continuous section of stuffed meat product.

After the stuffing area 3 there is a stapling machine 5. Said stapling machine 5 chokes said stuffing continuous section, at regular intervals, by means of a double staple, i.e. by means of a first and a second slightly spaced staples 6, 7. Said stapling machine 5, in addition, cuts thereafter the sleeve 4 by the portion 4a thereof located between said first and said second staples 6, 7 to produce individual elements of stuffed meat product sealed at both ends by staples 6,7.

Between said outlet 2 of the stuffing machine 1 and said stuffing area 3, a trimming device 8 is installed adapted to produce a cross cut which determines separations A, at regular intervals, in said continuous flow of meat product, before they are introduced in said endless sleeve 4. The device includes programmable control means (not shown) to have said separation A coincident at regular intervals with the further regular choking intervals by means of said staples 6, 7. So that, at the stapling step, the meat product at both sides of the separation A is withdrawn under the pressure of the double staple 6, 7 leaving the portion of the sleeve 4a between staples 6, 7 clean and clear so that when it is cut stapled individual elements of sausage are achieved with excellent appearance and sanitary properties.

Thereafter, it is referred to Fig. 3 to 6, in which it is shown that said trimming device 8 comprises an enclosure intercalated in the duct of the meat product continuous flow which provides a passageway for them and a guide for a cross cutting blade 9 which has access to the enclosure through a passageway which remains closed by the cutting blade itself 9.

Said enclosure is formed by a liner which comprises two halves 10, 11, matched with tongues and grooves, which when coupled to each other leave a flat cavity 12 between them for housing and guiding said cutting blade 9. Each of the two halves 10, 11 incorporates an opening 13 for the passage of said meat product, having a cross section equal in shape and sizes as the cross section of the meat product flow. When they are assembled said openings 13 remain directly facing each other and perpendicular to the guiding planes of the cutting blade.

One of the ends 12a of said flat cavity 12 close to said openings 13 remains closed by the tongues and grooves matching of said two halves 10, 11, while the other end 12b remains open for the free passage of the cutting blade 9. Dering the operation, said end 12b remains closed by the cutting blade itself 9 by virtue of the small clearances.

The travel of the cutting blade 9 is carried out between a first position in which said openings 13 remains clear and a second position in which the cutting blade 9 remains fully interposed between said openings 13.

In order to minimize the empty spaces around the openings 13, the profile of the cutting blade 9 edge 14 is convex and is adapted to the contour of said openings 13, while the internal contour of the closed end 12a of the flat cavity 12, defined by two halves 10, 11 is adapted to the profile of said cutting blade 9 edge 14.

The two halves 10, 11, matched with tongues and grooves, constituting said liner are of a low coefficient of friction and high abrasion resistance material such as, for example, a polyethylene polymer.

The trimming device has available means which comprise said enclosure allowing the eventual opening thereof. Said means comprise two half-ducts 15, 16, directly facing each other, provided with respective flanges 17, 18 at their mouthpieces facing each other, which are hinged to each other by a point 19 of their periphery and provided with fastening means 20 at a directly opposed point. Said flanges 17, 18 may be backed on the two halves 10, 11, packing them in their tongues and grooves letting-in. By freeing the fastening means 20, the two half-ducts can rotate on the hinge 19 leaving free access to the interior of the enclosure to make cleaning and maintenance of cutting blade 9, the flat cavity 12 two halves 10, 11, openings 13 and half-ducts 15, 16 easier.

Said flanges 17, 18 faces facing each other include protrusions 21 which are matched with related offsets 22 of the two halves 10, 11 so that two half-ducts 15, 16 directly facing the liner openings 13 is secured. In addition, in order to prevent liquid leakage from the meat products between the faces of the flange 17, 18 contacting, respectively, the faces of the halves 10, 11, tightness elastic means 30 are included.

The trimming device 8 includes a supporting member 23, linked to the stuffing machine 1 by means of an hinge 24, provided with a fork-shaped portion 23a to which flange 17 is joined as well as a bent appendage 25 to which are fastened driving means of the cutting blade 9. The support 23 is arranged so that the half ducts 15, 16 remains directly facing the outlet 2 of the stuffing machine 1 and the duct of the stuffing area 3, respectively.

In order to make the device cleaning and maintenance easier, the whole cutting assembly 8 may rotate with respect to the hinge 24 giving access to said outlet 2, fastening means being available between the half duct 15 and the outlet 2 and between the half duct 16 and the duct of the stuffing area 3, tightness elastic means 28 being included at respective areas of contact.

The cutting blade 9 is driven by means which comprise a fluid dynamic cylinder 26 attached to the bent portion 25 of the supporting member 23. The cylinder 26 rod 27 is joined to an end of said cutting blade 9, opposite to the edge 14, by suitable fastening means 29, such as, for example, a block integral with the rod 27 having a notch adapted to receive the end of the cutting blade 9 and a screw fixed on said block which crosses the blade 9 through a hole provided for such aim.

## Claims

1. Device for stuffing meat product sealed by stapling, of the type comprising:
- a stuffing area (3) where a continuous flow of previously conditioned meat product, supplied by a stuffing machine (1) through an outlet (2) is introduced in an endless sleeve (4) with a first end previously closed by means of a staple, providing a continuous sausage section; and
- a stapling machine (5) located after the stuffing area (3) which chokes said sausage continuous section at regular intervals by means of a first and a second slightly spaced staples (6, 7) and which cuts the sleeve (4) by the portion (4a) thereof between said first and said second staples (6, 7) to produce individual elements of stuffed meat product sealed by stapling,
- a trimming device (8) located between said outlet (2) of the stuffing machine (1) and said stuffing area (3), adapted to produce a cross cut which determines a separation (A) at regular intervals of said continuous flow of meat product before its introduction in said endless sleeve (4),
said trimming device (8) comprising an enclosure intercalated in the meat continuous flow and providing a passage for the meat product and a guide for a cross driven cutting blade (9) coming into the enclosure through a passageway, said enclosure comprising two halves (10, 11), coupled to each other leaving a cavity (12) between them for housing and guiding said cutting blade (9),
**characterized in that** the coupling of said halves (10, 11) closes one of the ends (12a) of said flat cavity (12) close to openings (13) for meat product passage incorporated in each of the two halves while it leaves the other end (12b) open for the cutting blade (9) free passage, said end (12b) remaining in operation, closed by the cutting blade (9) by virtue of the small clearances.

2. Device, according to claim 1, **characterized in that** said enclosure includes means allowing the opening thereof, comprising two half ducts (15, 16), directly facing each other, provided with respective flanges (17, 18) at their mouthpieces facing each other, which are hinged to each other by a point (19) of their periphery and provided with fastening means (20) at a point directly opposite , said flanges (17, 18) may be backed on the two halves (10, 11) packing them in their tongues and grooves match.

3. Device according to claim 2, **characterized in that** said enclosure being formed by a liner which comprises two halves (10, 11) of matched grooves and tongues which, when coupled to each other, leave a flat cavity (12) between them for housing and guiding said cutting blade (9).

4. Device, according to claim 1, **characterized in that** the cutting blade (9) edge (14) profile is convex and adapt itself to the contour of said openings (13) while the internal contour of the closed end (12a) of the flat cavity (12) defined by two halves (10, 11) adapts itself to the profile of said cutting blade (9) edge (14) so that the empty spaces around the openings (13) are minimized.

5. Device, according to claim 3, **characterized in that** the two halves (10, 11) grooves and tongues matched constituting said liner are of a low coefficient of friction and high abrasion resistance material, such as, for example, a polyethylene polymer.

6. Device, according to claim 1, **characterized in that** it further includes programmable control means for making said separation (A), at regular intervals, of the continuous flow of meat product so as to be coincident with further regular choking intervals.

7. Device, according to claim 2, **characterized in that** the faces of said flanges (17, 18) facing each other include protrusions (21) which are matched with related offsets (22) of the two halves (10, 11) so that direct facing of the two half ducts (15, 16) with the openings (13) of the liner is secured.

8. Device according to claim 2 or 7, **characterized in that** between the faces of the flanges (17, 18) in contact with the faces of the halves (10, 11) tightness elastic means (30) are included.

9. Device, according to claim 2, **characterized in that** it includes a supporting member (23), linked to the stuffing machine (1) by means of an hinge (24) provided with a fork-shaped portion (23a) to which is joined one of the flanges (17, 18) and with a bent appendage (25) to which driving means (26) for the cutting blade (9) are attached so that the half ducts (15, 16) remain directly facing the outlet (2) of the stuffing machine (1), the whole trimming assembly (8) being able to rotate with respect to the hinge (24) to provide access to said outlet (2).

10. Device, according to claim 9 **characterized in that** the trimming device (8) has available fastening means between the half ducts (15, 16) and the outlet (2) and the duct of the stuffing area (3), including tightness elastic means (28) at the areas of contact.

11. Device, according to claim 1, **characterized in that** said driving means of the cutting blade (9) comprise a fluid dynamic cylinder (26) the rod (27) of which is joined to an end of said cutting blade (9), opposite to the edge (14), by fastening means (29).

## Patentansprüche

1. Vorrichtung zum Abfüllen von Fleischprodukten, die mit Heftklammern verschlossen werden, mit:
- einem Abfüllbereich (3), in dem ein kontinuierlicher Strom von zuvor aufbereitetem Fleischprodukt, der von einer Abfüllmaschine (1) durch eine Ausgangsöffnung (2) zugeführt wird, in eine Endloshülle (4) mit einem zuvor mit Heftklammer verschlossenen Ende abgefüllt wird, wodurch ein durchgehender Wurstabschnitt entsteht; sowie
- einer Heftklammerbefestigungsmaschine (5), die sich im Anschluss an den Füllbereich (3) befindet, durch die der durchgehende Wurstabschnitt in regelmäßigen Abständen mittels einer ersten und zweiten leicht voneinander beabstandeten Heftklammer (6, 7) abgeschnürt wird und durch die die Hülle (4) um den Abschnitt (4a) zwischen der ersten und zweiten Heftklammer (6, 7) abgeschnitten wird, wodurch einzelne Elemente aus mit Heftklammern verschlossenem abgefülltem Fleischprodukt entstehen,
- einer Abschneidvorrichtung (8), die sich zwischen der Ausgangsöffnung (2) der Abfüllmaschine (1) und dem Abfüllbereich (3) befindet, mit der ein Kreuzschnitt ausgeführt wird, durch den in regelmäßigen Abständen des kontinuierlichen Fleischproduktstroms eine Trennung (A) vor dessen Abfüllen in die Endloshülle (4) erfolgt,
wobei die Abschneidvorrichtung (8) ein in den kontinuierlichen Fleischproduktstrom eingepasstes Gehäuse, das für das Fleischprodukt einen Durchgang darstellt und eine Führung für eine quer geführte Schneide (9) aufweist, die in das Gehäuse durch einen Durchgang gelangt, wobei das Gehäuse zwei aneinandergekoppelte Hälften (10, 11) aufweist, wodurch zwischen ihnen ein Zwischenraum (12) für die Lagerung und Führung der Schneide (9) bleibt,
**dadurch gekennzeichnet, dass** die Kopplung der Hälften (10, 11) eines der Enden (12a) des flachen Zwischenraums (12) nahe der Öffnungen (13) für den in einer der beiden Hälften eingebauten Fleischproduktdurchgang verschließt, während sie das andere Ende (12b) offen lässt, damit die Schneide (9) sich frei hindurch bewegen kann, wobei das Ende (12b) in Betrieb bleibt, da es durch die Schneide (9) aufgrund der geringen Abstände verschlossen wird.

2. Vorrichtung nach Anspruch 1, **dadurch gekennzeichnet, dass** das Gehäuse Mittel zu deren Öffnen aufweist, die zwei Halbkanäle (15, 16) aufweisen, die direkt einander gegenüber liegen und an ihren gegenüberliegenden Öffnungen, die an einer Stelle (19) der Peripherie miteinander durch ein Scharnier verbunden und an einer direkt gegenüber liegenden Stelle mit Befestigungsmitteln (20) versehen sind, mit entsprechenden Flanschen (17, 18) versehen sind, wobei die Flansche (17, 18) an der Rückseite der beiden Hälften (10, 11) anliegen und sie in ihrer Nut- und Federverbindung zusammenklemmen.

3. Vorrichtung nach Anspruch 2, **dadurch gekennzeichnet, dass** das Gehäuse von einer Auskleidung mit zwei Hälften (10, 11) mit aufeinander abgestimmten Federn und Nuten gebildet wird, die, wenn sie aneinander gekoppelt werden, einen flachen Zwischenraum (12) zwischen ihnen lassen, in dem die Schneide (9) gelagert und geführt werden kann.

4. Vorrichtung nach Anspruch 1, **dadurch gekennzeichnet, dass** das Profil der Kante (14) der Schneide (9) konvex ist und sich an die Kontur der Öffnungen (13) anpasst, während sich die Innenkontur des verschlossenen Endes (12a) des durch die zwei Hälften (10, 11) gebildeten flachen Zwischenraums (12) an das Profil der Kante (14) der Schneide (9) anpasst, so dass die Leerräume um die Öffnungen (13) auf ein Minimum reduziert werden.

5. Vorrichtung nach Anspruch 3, **dadurch gekennzeichnet, dass** die die Auskleidung darstellenden beiden Hälften (10, 11) mit den passenden Nuten und Federn aus einem verschleißfesten Material mit niedrigem Reibungskoeffizienten, wie z.B. einem Polyethylenpolymer, bestehen.

6. Vorrichtung nach Anspruch 1, **dadurch gekennzeichnet, dass** sie außerdem programmierbare Steuermittel zur Herstellung der Trennung (A) in regelmäßigen Abständen des kontinuierlichen Fleischproduktstroms aufweisen, so dass diese mit den weiteren regelmäßigen Abschnürabständen übereinstimmen.

7. Vorrichtung nach Anspruch 2, **dadurch gekennzeichnet, dass** die sich gegenüber liegenden Flächen der Flansche (17, 18) Vorsprünge aufweisen, die mit den entsprechenden Verschiebungen (22) der beiden Hälften (10, 11) übereinstimmen, wodurch sichergestellt ist, dass die zwei Halbkanäle (15, 16) den Öffnungen (13) der Auskleidung direkt gegenüber liegen.

8. Vorrichtung nach Anspruch 2 oder 7, **dadurch gekennzeichnet, dass** zwischen den an den Flächen der Hälften (10, 11) anliegenden Flächen der Flansche (17, 18) elastische Dichtungsmittel (30) angeordnet sind.

9. Vorrichtung nach Anspruch 2, **dadurch gekennzeichnet, dass** sie ein Halteglied (23) aufweist, das mit der Abfüllmaschine (1) über ein Scharnier (24) verbunden ist, das einen gabelförmigen Abschnitt (23a), mit dem einer der Flansche (17, 18) verbunden ist, und einen gebogenen Fortsatz (25) aufweist, an dem Antriebsmittel (26) für die Schneide (9) befestigt sind, wodurch die Halbkanäle (15, 16) der Ausgangsöffnung (2) der Abfüllmaschine (1) weiterhin direkt gegenüber liegen, wobei der gesamte Abschneidaufbau (8) bezüglich des Scharniers (24) drehbar ist und somit einen Zugang zu der Ausgangsöffnung (2) ermöglicht.

10. Vorrichtung nach Anspruch 9, **dadurch gekennzeichnet, dass** die Abschneidvorrichtung (8) zwischen den Halbkanälen (15, 16) und der Ausgangsöffnung (2) und dem Kanal des Abfüllbereichs (3), einschließlich der elastischen Dichtungsmittel (28) an den Kontaktbereichen, Befestigungsmittel aufweist.

11. Vorrichtung nach Anspruch 1, **dadurch gekennzeichnet, dass** die Antriebsmittel für die Schneide (9) einen flüssigkeitsdynamischen Zylinder (26) aufweisen, dessen Stange (27) mit einem, der Kante (14) gegenüber liegenden Ende der Schneide (9) mit Befestigungsmitteln (29) verbunden ist.

## Revendications

1. Dispositif pour former des saucisses avec de la viande, fermées par des agrafes, du genre comportant:
- une zone de bourrage (3) où un débit continu de viande préalablement traitée, fournie par une machine de bourrage (1) à travers une ouverture (2) est introduite dans un boyau sans fin (4) ayant une première extrémité préalablement fermée au moyen d'une agrafe, fournissant une section de saucisse continue; et
- une machine d'agrafage (5) située à la suite de la zone de bourrage (3) qui ferme cette section continue de saucisse à des intervalles réguliers au moyen d'une première et une deuxième agrafes légèrement écartées (6, 7) et qui coupe le manchon (4) par sa portion (4a) entre ces première et deuxième agrafes (6,7) pour produire des saucisses individuelles fermées par des agrafes,
- un dispositif de coupe (8) situé entre cette sortie (2) de la machine de bourrage (1) et cette zone de bourrage (3) adapté pour trancher ce qui entraîne une séparation (A) à des intervalles réguliers de ce débit continu de viande avant son introduction dans ce boyau sans fin (4),
ce dispositif tranchant (8) comportant un espace clos intercalé dans le débit continu de viande et fournissant un passage pour la viande et une guide pour une lame tranchante (9) qui est entraînée transversalement , en entrant dans l'espace clos à travers un passage, cet espace clos comportant deux moitiés (10, 11), emboîtées entre elles en laissant une cavité (12) entre elles pour y loger et guider cette lame tranchante (9);
**caractérisé en ce que** l'emboîtement de ces moitiés (10, 11) ferme une des extrémités (12a) de cette cavité plate (12) près des ouvertures (13) pour le passage de viande incorporé à chacune des deux moitiés tandis qu'il laisse l'autre extrémité (12b) ouverte pour que la lame tranchante (9) passe librement, cette extrémité (12b) restant en fonctionnement, fermée par la lame tranchante (9) grâces aux petits dégagements.

2. Dispositif conformément à la revendication 1, **caractérisé en ce que** cet espace clos comporte des moyens permettant leur ouverture, comprenant deux moitiés de conduite (15, 16), se faisant face directement, pourvues de brides respectives (17, 18) à leurs ouvertures qui se font face, qui sont articulées entre elles par un point (19) de leur périphérie et pourvues de moyens de fixation (20) à un point directement opposé, ces brides (17, 18) peuvent être renforcées sur les deux moitiés (10, 11) en les comprimant dans leur assemblage à fausses languettes.

3. Dispositif conformément à la revendication 2, **caractérisé en ce que** cet espace clos est formé par une doublure comprenant deux moitiés (10, 11) d'assemblage à fausses languettes qui, lorsqu'elles sont emboîtées , laissent une cavité plate (12) entre elles pour y loger et guider cette lame tranchante (9).

4. Dispositif conformément à la revendication 1, **caractérisé en ce que** le profil du bord (14) de cette lame tranchante ((9) est convexe et qu'il épouse le contour de ces ouvertures (13) tandis que le contour interne de l'extrémité fermée (12a) de la cavité plate (12) définie par deux moitiés (10, 11) épouse le profil de ce bord (14) de la lame tranchante (9) de sorte que les espaces vides autour des ouvertures (13) sont minimisés.

5. Dispositif conformément à la revendication 3, **caractérisé en ce que** les deux moitiés (10, 11) à assemblage à fausses languettes constituant cette doublure sont en un matériau à coefficient de friction faible et résistance à l'abrasion élevée, tel que, par exemple, une polymère de polyéthylène.

6. Dispositif, conformément à la revendication 1, **caractérisé en ce qu'**il comporte également des moyens de contrôle programmables pour faire cette séparation (A), à des intervalles réguliers, du débit continu de viande de sorte qu'il coïncide avec des intervalles réguliers de fermeture.

7. Dispositif, conformément à la revendication 2 , **caractérisé en ce que** les faces de ces brides (17, 18) se faisant face comporte des bosses (21) qui sont combinées avec des évidements correspondants (22) des deux moitiés (10, 11) de sorte que l'on assure que les deux moitiés de conduite (10,11) fasse face aux ouvertures (13) de la doublure.

8. Dispositif conformément à la revendication 2 ou 7, **caractérisé en ce que**, entre les faces des brides (17, 18) en contact avec les faces des moitiés (10, 11) des moyens élastiques d'étanchéité (30) sont prévus.

9. Dispositif conformément à la revendication 2, **caractérisé en ce** q'il comporte un membre de support (23), relié à la machine de bourrage (1) au moyen d'une articulation (24) pourvue d'une portion fourchue (23a) à laquelle est reliée une des brides (17, 18) et avec un appendice courbé (25) auquel sont reliés des moyens d'entraînement (26) pour la lame tranchante (9) de sorte que les moitiés de conduite (15, 16) restent directement en face de la sortie (2) de la machine de bourrage (1) tout l'assemblage de coupe (8) pouvant tourner par rapport à l'articulation (24) pour fournir un accès à cette ouverture (2).

10. Dispositif conformément à la revendication 9 **caractérisé en ce que** le dispositif de coupe (8) possède des moyens de fixation entre les moitiés de conduite (15, 16) et la sortie (2) et la conduite de la zone de bourrage (3), comportant des moyens élastiques d'étanchéité (28) dans les zones de contact.

11. Dispositif conformément à la revendication 1, **caractérisé en ce que** ces moyens d'entraînement de la lame tranchante (9) comprennent un cylindre hydrodynamique (26) dont la tige (27) est reliée à une extrémité de cette lame tranchante (9) opposée au bord (14), par des moyens de fixation (29).
